# EUROPEAN PATENT APPLICATION

(11) **EP 4 644 341 A1**
(43) Date of publication of application: **05.11.2025**
(21) Application number: 24173551.3
(22) Date of filing: 30.04.2024
(51) Int. Cl.: C03C 1/00, C03C 3/087, C03C 1/02

(54) **USE IN A GLASS BATCH OF A MODIFIED CALCIUM OR CALCIUM-MAGNESIUM SOURCE WITH LOW DUST AND IMPROVED CARBON-FOOTPRINT**

(71) Applicant: S.A. LHOIST RECHERCHE ET DEVELOPPEMENT, 1342 Ottignies-Louvain-la-Neuve (BE)
(72) Inventor: BEIRAO, Lucas, 1420 Braine L'Alleud (BE); HURA, Daniel, 6061 Charleroi (BE)
(74) Representative: Calysta NV

(57) **Abstract**

The invention relates to an advantageous use of a calcium or calcium-magnesium raw material in a glass batch, for feeding a glass manufacturing process, wherein said calcium or calcium-magnesium raw material comprises (i) quicklime and/or dolime, (ii) a non-aqueous organic fluid compound and (iii) less than 20 wt% of total carbonate (expressed as CO₂). It also related to a process of manufacturing a glass comprising calcium or calcium-magnesium, said process comprising steps of melting a glass batch followed by fining a glass melt in a glass furnace, with the said calcium and/or calcium-magnesium raw material.

## Description

### Technical Field

The present invention is in the context of the glass industry and, in particular, in the domain of glass manufacturing which includes melting a glass batch (or a mixture of raw materials) in a glass furnace following by a fining in order to produce glass articles, like glassware, glass sheets or glass containers.

In particular, the invention relates to the use, in a glass batch to be fed in a glass furnace, of a specific calcium or calcium-magnesium source that allows reducing CO₂ emissions (lower CO₂ footprint) and energy consumption with additional advantages like notably addressing the issues of dust emissions. The present invention also relates to a process of manufacturing a glass, including the use of that specific calcium or calcium-magnesium source as a raw material.

### Prior art

Glass articles, in particular silicious or soda-lime glass articles, are made commonly by melting at high temperatures (e.g. 1200-1500°C) a glass batch comprising mainly silica sand, limestone (i.e. calcium carbonate) and/or dolomite, sometimes called dolostone (i.e. calcium-magnesium carbonate), and soda ash (i.e. sodium carbonate). Depending notably on the glass furnace, the targeted properties and use of the final glass produced, the glass batch comprises these main raw materials in variable amounts and generally, it also comprises other raw materials like, for example, potassium, aluminum, magnesium and/or boron source(s), cullet, and additive(s) (coke, sulphates,...) and coloring agents.

As conventional glass melting processes, especially for float and container glass articles, have used for decades essentially carbonates as sources of sodium, calcium and magnesium, glass industry is considered as an important direct emitter of CO₂ occurring from the decarbonization of these raw materials during melting. In addition to this, CO₂ released during glass melting generates bubbles (foaming) inside the glass melt, therefore a further process of fining is necessary to guarantee the removal of all these bubbles before solidification.

Finally, the glass manufacturing process is also greatly energy-demanding, to melt the solid glass batch and maintain the melt at high temperatures for fining, thereby generating also indirect CO₂ emissions.

Though, CO₂ is an important societal and economical challenge for European industrial players due to the transition to low CO₂ technologies. The global warming, the requirements for CO₂ emissions reduction, CO₂ taxes and the energy prices have put more and more pressure on glass manufacturers in particular and represent a current or future threat in their business competitivity. In that context, the glass industry has invested a lot since years in developments and actions in order to reduce energy consumption and/or CO₂ emissions of its manufacturing processes.

One of the levers identified to reduce the direct and indirect CO₂ emissions per ton of produced glass relies on the use of alternative raw materials, in particular the replacement of carbonates by a corresponding decarbonated material.

In particular, it is already known in the art to replace limestone (i.e. calcium carbonate) by its corresponding oxide (quicklime, i.e. CaO). It is also known, but in a lesser extent, to replace dolomite (i.e. calcium and magnesium carbonate) by its corresponding oxide (dolime, i.e. CaO.MgO).

The main advantage with the use of limestone and/or dolomite as calcium and/or calcium-magnesium source in a glass batch, next to their low costs, is the fact that these products have high densities and show rather coarse grains (up to 3 or even 5 mm) and therefore emit very limited amounts of dust during handling, mixing with the other glass batch raw materials, transport through conveyors, introduction in the furnace, etc. Moreover, limestone and dolomite are inert in the presence of water, meaning that if the glass manufacturer anyhow wishes to further decrease dust emissions, the batch can be moisturized without any issue (in particular, without any chemical reactions).

Replacing limestone by quicklime (or dolomite by dolime, or both) in a glass batch may at first sight not seem to be a solution to reduce CO₂ emissions as the CO₂ from the limestone and/or dolomite will anyway be released, as quicklime and dolime are manufactured by burning limestone or dolostone (or crude dolomite) in a furnace called commonly "lime kiln" where the carbonates are converted into oxides and CO₂. However, it is known in the art that the energy efficiency of a lime kiln is higher than that of a glass furnace, meaning that the energy required to decompose 1 ton of limestone or dolostone will be lower in a lime kiln than in a glass furnace, which implies consequently less CO₂ emissions from fuels.

Moreover, it appears that the melting (and fining) kinetics of a glass batch made with quicklime and/or dolime as calcium and/or calcium and magnesium source is increased compared to that of a glass batch made with limestone and/or dolostone. This means that, in a given glass furnace at a given temperature, the pull can be increased and therefore, the energy consumption as well as the CO₂ emitted per ton of glass can be decreased. Nevertheless, replacing limestone by quicklime and/or dolostone by dolime in a glass batch leads to other issues, particularly related to their reactivity with water and associated dust emissions.

In a glass manufacturing process, dust is potentially emitted i) in the conveying and dosing circuits of the raw materials upstream of the batch mixer, ii) in the batch mixer, iii) in the batch conveying circuits upstream of the furnace, iv) when the batch is introduced into the furnace, but also v) in the furnace itself. Dust emissions may therefore have an impact at different locations and generate adverse effects like losses of raw materials, pilling-up in /clogging of the fumes ducts and heat exchangers, reduction of the lifetime of the refractories, increase of cleaning requirements, creation of a need for dust removal circuits, generation of health hazards for workers, etc.

The particle size of quicklime and/or dolime can be adjusted by several means (milling, screening, classification...) in order to manufacture a product that is low in terms of dust emissions. However, quicklime and dolime have a lower mechanical resistance than limestone and dolostone, and therefore, after their manufacturing with a well-controlled particle size, they are prone to generate more fines during transport, handling, loading..., which results in the end, especially upon arrival at customer site, to increased dust emissions upstream of the batch mixer compared to when using limestone and dolostone.

Glass batch moisturization is a very common practice to reduce dust emissions in general in the glass industry and also avoid segregation during batch storage. However, water and quicklime react together exothermically, which results in a release of heat that makes the batch difficult to handle. Moreover, this hydration reaction (or slaking) generates calcium hydroxide particles (hydrated lime) that have a smaller granulometry and are lighter ("fines") than the initial oxide and leads thus to the generation of additional fine particles and increased significantly dust emissions. Moreover, one additional drawback of such use of water increases slightly the energy consumption, due to the need of evaporation of this added water during the melting step.

In many cases, tendency would be to add more water to circumvent these difficulties. However, more water means more hydration, therefore more heat released, more fine particles and more energy to decompose the hydrated compounds in the furnace.

One way to reduce hydration of quicklime/dolime in a glass batch is to screen out the fine particles in order to reduce the points of contact between the lime particles and water. This process is called herein "defillerization". However, this generates a by-product (fines) for which other applications have to be found, otherwise it represents a loss.

In addition to dust emission reduction, other reasons why water is usually added to glass batches are to avoid segregation of the raw materials during storage of the glass batch before entrance into the glass furnace and to favor what is called herein "pile effect". Indeed, adding water to a batch containing limestone and dolostone creates some cohesion between the particles which will reduce risk of segregation during storage of the batch and improve batch homogeneity. Moreover, thanks to the presence of water, the batch will create small piles when entering into the furnace, whereas an equivalent dry batch would create a fine layer on top of the molten glass when entering into the furnace. Having piles brings the advantage in current gas fired furnaces (at least furnaces with flames) that the batch will be closer to the flame that is usually coming from the top in direction of the molten glass bath. This proximity leads to a quicker diffusion of the heat throughout the batch, to the quicker formation of the first liquid phase and thus to a quicker melting reaction. In a batch containing quicklime and/or dolime, the water will be consumed by hydration, even if more water is added, and the anti-segregation as well as the "pile effect" will be significantly reduced. Finally, adding water to a glass batch is also beneficial for facilitating dosage of raw materials.

The issue of quicklime reactivity with water could be solved by using hydrated lime (Ca(OH)₂) instead but this solution has not been adopted in the art because hydrated lime is known to have a smaller granulometry than quicklime and therefore to emit more dust.

Several solutions to the above issues when replacing limestone by quicklime have been proposed in the art.

Hence, in document US4028131, it is proposed to replace limestone by quicklime and combine it with a specific amount of caustic soda (e.g. a 70% concentrated solution at 80°C) in the glass batch. According to US4028131, there is a synergistic effect of the use of quicklime with caustic soda, which reduces the disadvantage arising from the use on fine powders of quicklime, does not require sizing of the material and allows an increase in speed of fusion and fining. However, the use of concentrated solution of caustic soda brings some drawbacks and should be avoided, when possible, in industrial process.

In document WO2019/002802A1, it is proposed to replace limestone by quicklime in a glass batch together with a specific feature of the process. Hence, WO2019/002802A1 discloses a process for manufacturing glass comprising the preparation of a glass batch, in which water, sand and sodium carbonate are mixed in specific proportions and, after a delay (e.g. a time of at least 10 minutes or preferably at least one hour), quicklime is added to the batch. According to the applicant, such a specific process allows to decrease energy consumption and amount of CO₂ release. Moreover, issues regarding batch dust are also reduced (the initial particle size of the constituents introduced into the batch would be substantially conserved) since the quicklime is not put into contact with the moisturized batch. However, delaying the addition of a specific raw material (by one hour, for example) compared to the others represents an additional operational burden for the glass workers and a delay of the overall process, what should be avoided at maximum.

Next to that, it is to be noted that replacing dolomite by its corresponding oxide (dolime) leads to the same issues as those explained in relation with the replacement of limestone by quicklime, and that the issues of too fine particle size mentioned earlier in the case of the use of hydrated lime would be encountered as well if hydrated dolime (Ca(OH)₂.xMg(OH)₂.(1-x)MgO, with 0 ≤ x ≤ 1) would be used to replace dolostone/dolomite.

Therefore, in the current environmental and economic situation, there is still a need in the glass industry to have an alternative calcium or calcium-magnesium source/raw material leading to reduced CO₂ emissions (direct and indirect) while (i) containing fine particles but still having a low dust emission during its handling, transportation and storage, (ii) which does not require to modify/adapt the established glass manufacturing process, (iii) which allows to be combined with the other raw materials (no sequenced or delayed addition), (iv) which permits moisturizing the glass batch without generating additional fine particles and (v) which ensures quicker melting of the glass batch (or better heat diffusion in the batch due to the "pile effect").

### Objectives of the invention

The present invention has notably the objective of overcoming the cited drawbacks of the prior art.

More precisely, an objective of the invention is to provide a use, in a glass batch, of an improved raw material for calcium or calcium-magnesium, aimed to be introduced in a glass manufacturing process.

In particular, an objective of the invention is to provide the use in a glass batch of an improved raw material for calcium or calcium-magnesium, that, when added in a glass batch, allows reducing the CO₂ emission of the glass manufacturing process by ton of glass produced.

Another objective of the invention is to the use in a glass batch of an improved raw material for calcium or calcium-magnesium that allows increasing energy efficiency and improve the kinetics of the glass manufacturing process.

Still another objective of the invention is to provide the use in a glass batch of an improved raw material for calcium or calcium-magnesium that has a low dust emission, in particular during its handling, its conveying and its dosing upstream of the glass batch mixer, even though it contains fine particles.

Still another objective of the invention is to provide the use in a glass batch of an improved raw material for calcium or calcium-magnesium that does not need any adaptation of the established manufacturing process (e.g., batch sequencing, delaying).

Still another objective of the invention is to provide the use in a glass batch of a raw material for calcium or calcium-magnesium that may be combined with the other raw materials of the glass batch and which permits moisturizing this batch without significant issues in and downstream of the glass batch mixer (dust, reactivity, etc.)

Still another objective of the invention is to provide a glass manufacturing process involving an improved raw material for calcium or calcium-magnesium, with the same advantages/objectives as exposed above.

Finally, another objective of the invention is to provide a solution to the disadvantages of the prior art that is simple and cheap.

### Description of the invention

The invention relates to the use of a calcium orcalcium-magnesium raw material in a glass batch, for feeding a glass manufacturing process, characterized in that said calcium or calcium-magnesium raw material comprises :
- quicklime and/or dolime;
- a non-aqueous organic fluid compound; and
- less than 10 wt% of total carbonate (expressed as CO₂).

Hence, the invention is based on a novel and inventive approach. In particular, the inventors evidenced that using quicklime and/or dolime in a glass batch, in total replacement of their corresponding carbonates, combined with a non-aqueous organic fluid compound (esp. a mineral oil, a polyolefin and/or a vegetal oil) to provide a modified Ca/Ca-Mg raw material allows reaching the known and above-cited advantages linked to the use of decarbonated compounds (reduced CO₂ emissions, energy efficiency, increased pull, ...) while, despite the use of lime/dolime, controlling dust, generating a pile effect, allowing moisturizing and keeping a controlled glass manufacturing process without influencing the glass quality.

The addition of an organic material like a mineral oil in a glass batch aimed at being fed in a glass furnace is, as known in the glass art, something that is generally proscribed or should be avoided as much as possible. Indeed, it is well-established that the supply of any organic matter in a glass batch has a significant impact on several process parameters, especially on the batch and glass redox, that consequently has an impact on the final glass properties (quality, colour, optical properties, etc.).

Though, the inventors overcame this barrier and surprisingly discovered that the addition of a non-aqueous organic fluid compound to quicklime and/or dolime, esp. in the amounts required for controlling dust, does not impact significantly the glass process and the final glass properties.

Moreover, the non-aqueous organic fluid compound allows dust mitigation by binding the fines and light particles of quicklime/dolime together within the glass batch, thereby avoiding dust initially. Nevertheless, it was surprisingly evidenced that when the quicklime/dolime is moisturized (alone or when combined with the other raw materials to be fed), hydration occurs the same manner as if without addition of the organic fluid compound, thereby generating "fines", but those "fines" remains agglomerated. This results in low dust emissions even after hydration. The binding effect of the non-aqueous organic fluid compound of the invention therefore exists before hydration and after hydration, thereby permitting a moisturization of quicklime/dolime or a safe combination with a moisturized glass batch, without impacting negatively dust emissions. Due to the above aspects, the modified calcium or calcium-magnesium raw material allows reducing dusts during dry handling but also in the presence of water (even in case of a long storage of the wet glass batch, e.g. 24h).

Finally, the use according to the invention ensures quicker melting of the glass batch (or better heat diffusion in the batch due to pile effect) and also allows the lime producer to valorize most (or all) of the lime produced industrially, including fine fractions.

It is to be noted that the use of an additive of the type non-aqueous organic fluid compound, e.g. a mineral oil, is already known in association with quicklime in a very remote domain, namely the soil treatment to stabilize and/or dry them. Hence, in EP0880569B2, it is disclosed a soil treatment composition comprising quicklime with a maximum granulometry of 2 mm and a mineral oil, with an agglomeration of the fine particles comprised in the quicklime. During the treatment, in the presence of the soil moisture, said additive loses its agglomeration power upon hydration of the quicklime and, consequently, the finest particles are released from their agglomerate and are well distributed in the soil, whereas they are no longer able to be dispersed, for example by a side wind. Nevertheless, in view of this disclosure and next to the above-cited barrier, the skilled man in the glass art would have not contemplated the use of a mineral oil as in EP0880569B2 :
(i) because the domain of soil treatment is really remote from glass manufacturing, notably regarding its higher process temperatures and the existing high combustion/exhaust gas flow in a glass furnace compared to wind for soil treatment; and
(ii) because it is disclosed a de-agglomeration, namely a dispersion or release of "fines" when contact with water, which is in contradiction with one of the main objectives of the invention.

The invention also relates to a process of manufacturing a glass comprising calcium or calcium-magnesium, said process comprising steps of melting a glass batch followed by fining a glass melt in a glass furnace, characterized in that the raw material of calcium or calcium-magnesium in said glass comprises:
- quicklime and/or dolime,
- a non-aqueous organic fluid compound; and
- less than 10 wt% of total carbonate (expressed as CO₂).

Other features and advantages of the invention will be made clearer from reading the following description of preferred embodiments and figures, given by way of simple illustrative and non-restrictive examples.

In present specification and claims, it is well understood by the person skilled in the art that, as used herein the terms "a", "an" or "the" means "at least one" and should not be limited to "only one" unless explicitly indicated to the contrary. Also, when a range is indicated, the extremities are included. In addition, all the integral and subdomain values in the numerical range are expressly included as if explicitly written.

The invention relates to the use of a calcium or calcium-magnesium raw material in a glass batch, for feeding a glass manufacturing process.

By the terms "raw material" and "glass batch", it is intended herein the meaning given commonly in the related glass field and is fully understood by those skilled in the art.

By "glass manufacturing process" and as commonly adopted in the art, it is intended a process that allows manufacturing glass articles like glassware, glass sheets or glass containers, through melting of a glass batch comprising raw materials followed by fining a glass melt in a glass furnace.

According to the invention, the calcium or calcium-magnesium raw material comprises quicklime and/or dolime.

By "quicklime", it is meant within the meaning of the present invention a mineral solid material for which the chemical composition is mainly calcium oxide, CaO. Quicklime is usually obtained by calcination of limestone. It may commonly comprise some impurities present in the initial limestone minerals from which it derives and its calcination process (e.g. contamination from the fuel). Quicklime contains generally also some % of residual limestone, called unburned residues.

By "dolime", it is meant within the meaning of the present invention a mineral solid material for which the chemical composition is mainly calcium oxide and magnesium oxide, CaO.MgO. Dolime is usually obtained by calcination of dolostone or dolomite. It may commonly comprise some impurities, present in the dolomite mineral from which it derives and its calcination process (e.g. contamination from the fuel). Dolime contains generally also some % of residual dolostone, called unburned residues.

According to the invention, the calcium or calcium-magnesium raw material comprises less than 10 wt% of total carbonate (expressed as CO₂), preferably less than 7 wt% of total carbonate (expressed as CO₂), and more preferably less than 5 wt%, less than 3wt%, less than 2wt% or even less than 1 wt% of total carbonate (expressed as CO₂). This is advantageous as this allows using very few amounts to almost no carbonated Ca or Ca-Mg raw material and thereby, amongst others, reducing CO₂ emissions of the glass manufacturing process. This low carbonate content may, for example, come from unburned residues of quicklime and/or dolime or even from added carbonated materials if needed for some reasons It is, for example, possible in the invention to have a mixture of quicklime with dolostone or a mixture of dolime with limestone, provided that the maximum amount of carbonate is according to the invention or the above embodiments.

According to an embodiment, the calcium or calcium-magnesium raw material does not essentially comprise limestone and/or dolostone. By "limestone", as commonly adopted in the art, it is meant herein calcium carbonate of the formula CaCOs. By "dolostone", also called dolomite, as commonly adopted in the art, it is meant herein calcium magnesium carbonate of the formula CaMg(CO₃)₂. By "the calcium or calcium-magnesium raw material does not essentially comprise limestone and/or dolostone", this means that it may anyway comprises very small amounts of limestone and/or dolostone as usual impurities (esp. unburnt limestone and/or dolostone).

The amount of carbonate (expressed as CO₂) according to the invention means the carbonate content in the raw material as measured by loss on ignition (or LOI) between 550°C and 950°C.

According to an embodiment, said calcium or calcium-magnesium raw material comprises less than 5 wt%, preferably less than 4 wt%, less than 3 wt% and more preferably less than 2 wt% or less than 1 wt% of bound water.

The amount of bound water (expressed as H₂O) according to the invention means the water content in the raw material as measured by loss on ignition (or LOI) between 250°C and 550°C. This amount of bound water corresponds roughly to the Ca and/or Mg hydroxides (Ca(OH)₂ and/or Mg(OH)₂) that were formed by partial hydration (on the surface of the particles) of the quicklime and/or dolime between the moment when they came out of the limestone or dolostone kiln and the moment when they are used as a raw material for glass manufacturing.

The LOI may be obtained commonly using thermogravimetric analysis (TGA) performed by gradually raising the temperature of a sample of the composition, at a rate of 5°C/min from room temperature to at least 950°C (or to constant mass) in a furnace under a flow of nitrogen, as its weight is measured on an analytical scale. The weight of the sample is plotted against temperature to observe thermal transitions/decompositions that occur upon raising temperature. The mass loss occurring between 250°C and 550°C corresponds to the amount of bound water (expressed as H₂O) according to the invention. The mass loss (release of CO₂) occurring between 550°C and 950°C (or up to constant mass) corresponds to the amount of carbonate (expressed as CO₂) according to the invention.

According to an embodiment of the invention, the calcium or calcium-magnesium raw material has a maximum particle size of 10 mm, preferably 8 mm and, more preferably, 5 mm. By "maximum particle size" in the sense of the invention, it is meant the mesh size of a screen through which more than 97%, preferably more than 98% and more preferably more than 99% of the composition can pass.

According to another embodiment of the invention, the quicklime and/or dolime in the invention has a maximum quantity of fines of 90 wt%, preferably of 80 wt%, or 70 wt% and more preferably 60 wt%. By "fines", it is meant herein the particles with size below 0.1 mm as measured by screening.

According to another embodiment of the invention, the quicklime and/or dolime in the invention has a minimum quantity of fines of 10 wt%, preferably of 15 wt% and more preferably, 20 wt%. This means that it is not "defillerized" and despite this, is appropriate to be used in the invention and thereby allows the lime producer to valorize most (or all) of the lime produced industrially, including fine fractions. According to very preferred embodiment of the invention, the quicklime and/or dolime in the invention has a minimum quantity of fines of 60 wt%, preferably of 70 wt% and more preferably, 80 wt% or even up to 100 wt%.

In the invention, advantageously, many different types of limes (quicklime/dolime) may be used. No restriction on quicklime/dolime reactivity, porosity or morphology exists. Possibly a crushing step can be necessary to adequate the maximum particles size (e.g. 10 mm). No classification (screening, air classifying) is mandatory, but it can be used if needed for the industrial process and/or mine plan optimization.

According to an embodiment of the invention, the calcium or calcium-magnesium raw material has a Dust Area (a.u.) below 80, preferably below 50 and, more preferably, below 30, as measured on an amount of 50 grams of said raw material in a dry state and with a measurement time of 30 seconds. By "in a dry state", it is meant herein the raw material as prepared, without adding external water. This is advantageous as this means that the raw material of the invention in a dry state has an excellent behavior in terms of dust emissions.

Preferably, the calcium or calcium-magnesium raw material of the invention comprises less than 2000 ppm, preferably less than 1800 ppm and, more preferably, less than 1000 ppm of iron (expressed as Fe₂O₃). This is advantageous as the glass manufacturers generally seek to avoid iron as much as possible in many glass articles, due to its high coloring power even at very low amounts.

According to the invention, the calcium or calcium-magnesium raw material comprises a non-aqueous organic fluid compound.

Preferably, said non-aqueous organic fluid compound of the invention is a mineral oil, a polyolefin, a vegetal oil or a mixture thereof. More preferably, it is a mineral oil, a polyolefin, or a mixture thereof. In a very preferred embodiment, it is a mineral oil. Mineral oil (i.e. organic oil derived from mineral ressources) is also known as "white oil" or as "liquid petrol" or as "paraffine oil" or as "liquid paraffin" or as "paraffinum".

Preferably also, the non-aqueous organic fluid of the invention is essentially free of aromatic fractions and/or polynuclear compounds. By "essentially free", it is meant that, if it contains aromatic fractions and/or polynuclear compounds, it is in amounts in the order of impurities, for example below 1wt%.

According to an embodiment of the invention, the non-aqueous organic fluid is in an amount equal or lower than 8 wt%, preferably equal or lower than 6 wt%, or equal or lower than 4 wt%, more preferably equal or lower than 2 wt% or even lower than 1 wt%, related to the total weight of said calcium or calcium-magnesium raw material.

According to another embodiment of the invention, the non-aqueous organic fluid is in an amount equal or higher than 0.1 wt%, preferably equal or higher than 0.2 wt%, more preferably equal or higher than 0.3 wt%, or equal or higher than 0.5 wt%, or equal or higher than 0.7 wt% related to the total weight of said calcium or calcium-magnesium raw material.

The calcium and/or calcium-magnesium raw material of the invention may be prepared according to known and appropriate methods in the art. For example, the non-aqueous organic fluid according to the invention may be added to the quicklime and/or dolime by spraying. In case the non-aqueous organic fluid is too viscous at ambient temperature, a heating step may be applied before its adding to the quicklime and/or dolime, to improve the additive flowability (for instance a heating at 50°C). For example, mineral oils with low viscosity (e.g. kinematic viscosity under 80 cSt at 40°C) shall be avoided due to Health and Safety issues, as they are classified as CMR.

The invention relates to the use of a calcium orcalcium-magnesium raw material in a glass batch.

The glass batch according to the invention may comprise advantageously silica sand as source of silica, that is needed in the case of a silica glass (soda-silicate, aluminosilicate, borosilicate, etc.) and also soda/soda ash as source of sodium. Said glass batch may also comprise other compounds, in nature and amounts depending on the targeted glass composition and properties (i.e. its desired properties in terms of chemical/mechanical resistance, colour,...),. Examples of possible raw materials for the glass batch are potash, salt cake (or sodium sulfate, Na₂SO₄), nephelin, feldspar, boron oxide, barium oxide, cullet, selenium, coloring agents (cobalt oxide, chromium oxide,...), clarifying agents (cerium oxide,..), oxidizers (sodium nitrate,...), reducing agents (graphite, coke, pyrite,...).

Preferably, the calcium orcalcium-magnesium raw material is in an amount of 0.1 to 35 wt% in said glass batch, depending on the targeted content of Ca and Mg in the final glass product. Preferably, the calcium or calcium-magnesium raw material is in an amount of 0.1 to 20 wt% in said glass batch.

Preferably also, the glass batch has a dust area below 150, preferably below 100 and more preferably below 80, as measured on an amount of 100 grams of said glass batch in a dry state and with a measurement time of 30 seconds.

Preferably also, the glass batch, in the presence of 3 wt% water and after 24h reposing/storage time, has a dust area below 250, preferably below 200 and more preferably below 150.

In one particularly advantageous embodiment, said glass batch comprises also an alkaline silicate, especially of the formula A₂O.xSiO₂.yH₂O, with A being Na, K or Li. The combination of the non-aqueous organic fluid of the invention in the calcium and/or calcium-magnesium raw material, on the one hand, and an alkaline silicate in the glass batch, on the other hand, is of particular interest. In such an embodiment, the amount of alkaline silicate is lower than 10 wt% related to the weight of the glass batch. Preferably, it is lower than 8 wt%, lower than 7 wt%, lower than 5 wt%, or even lower than 3 wt% related to the weight of the glass batch. In such an embodiment, the amount of alkaline silicate is higher than 0.1 wt% related to the weight of the glass batch. Preferably, it is higher than 0.2 wt%, higher than 0.3 wt%, higher than 0.4 wt% or even higher than 0.5 wt% related to the weight of the glass batch. In such an embodiment also, the alkaline silicate is sodium silicate (A = Na). One example of sodium silicate is sodium metasilicate (SiO₂.Na₂O.yH₂O, also noted Na₂SiO₃.yH₂O, with y = 0, 5 or 9), also called "waterglass" or "water glass" or "liquid glass". Some other sodium silicates exist and may be used in the invention, like Na₂O.2SiO₂ (also called sodium disilicate), Na₂O.2,4SiO₂, or Na₂O.3,4SiO₂ (also called sodium trisilicate). Preferably also, the alkaline silicate is in the form of a powder or in the form of an aqueous solution, more preferably in the form of an aqueous solution. For example, it may be an aqueous solution of sodium metasilicate (waterglass) having a solid content ranging between 5 and 60 wt%, either ready to use (preferred) or made by dissolution of solid sodium metasilicate in water.

The invention also relates to a process of manufacturing a glass comprising calcium or calcium-magnesium, said process comprising steps of melting a glass batch followed by fining a glass melt in a glass furnace, wherein the raw material of calcium and/or calcium-magnesium in said glass comprises:
- quicklime and/or dolime,
- a non-aqueous organic fluid compound; and
- less than 10 wt% of total carbonate (expressed as CO₂).

Advantageously, the process of manufacturing a glass according to the invention is for manufacturing a flat (e.g. float) glass or a container/hollow glass.

According to the process of the invention, said raw material is either (i) added in the glass batch, or at least of part of the glass batch, before it is fed in the glass furnace and/or (ii) directly fed in the glass furnace. It is to be noted that, if said raw material is added in the glass batch before it is fed in the glass furnace, namely if it is mixed with other raw materials before being fed in the furnace, than this corresponds to the use according to the invention.

According to (i), the calcium or calcium-magnesium raw material is added to a glass batch, for example and as commonly known in the art, through a glass batch mixer, without any limitation regarding the way and the order of adding the raw materials, namely the raw material of the invention and the other raw materials.

Features and embodiments described above in relation with the use (for example, related to the calcium or calcium-magnesium raw material, for quicklime and/or dolime, for the non-aqueous organic fluid compound, for the glass batch, etc.) are applicable to the process of the invention as well.

The use of the specific calcium or calcium-magnesium raw material in a glass batch and in a glass furnace, allows advantageously:
- handling of dry products by the glass producer (silos charging, conveyor belts, etc ... );
- preparation of a dry glass batch together with other glass raw materials (feeding, conveyor belts, falls ... );
- moistening, mixing and handling the so-obtained wet glass batch, to be fed in the furnace.

It should be understood that the present invention is not limited to the described embodiments and that variations can be applied without going outside of the scope of the claims. It is further noted that the invention relates to all possible combinations of features, and preferred features, described herein and recited in the claims.

The following examples are provided for illustrative purpose and are not intended to limit the scope of this invention.

### Examples

Raw materials and glass batches according to the invention were prepared at lab scale.

### Dust area evaluation

The advantages of the invention in terms of dust emissions were determined by measuring the known parameter called "Dust Area".

The Dust Area were measured with a Microtrac DustMon RD100 from Retsch. This equipment consists of a dosing control system (sample beaker with a valve and a tube), a sample collector, a light source and a detector. The solid sample to measure is poured into the sample beaker. On starting the measurement, the valve opens and the sample drops down the tube into the sample collector. The dust generated in the sample collector is then measured by the detector, based on the obscuration of the light source. In order to be able to compare values between each other, the amount of sample used for the analyses to be compared must be the same, from a sample to another.

The resulting dust concentration is plotted vs time to reach a curve. The analysis is done during 30 seconds with 1000 measurements per second. The area under said curve, called Dust Area, expressed in arbitrary units (a.u.) is determined as an evaluation of the level of dust emissions of the sample.

For the composition according to the invention and raw materials taken independently, the amount of sample used is 50 g, in a dry state (no water added). In such conditions, measurement error is about ± 5 %.

For the glass batches prepared according to the invention, the amount of sample used is fixed at 100 g in a dry state (no water added) or in a wet state (3 wt% water added), which allows to express the dust emissions per t of batch and to compare batches prepared with different sources of calcium or calcium-magnesium. In such conditions, measurement error is about ± 5 %.

### Example 1

Two different calcium raw materials (Ex. 1.1 and Ex.1.2) according to the invention were prepared by mixing a quicklime and a mineral oil (Finavestan A100B) in two different proportions. The preparation was done in a planetary mixer (max speed during 5 minutes). Then, the obtained material was left 24h to age before analysis/measurement.

The proportions of quicklime and mineral oil are as follows :

| | %wt Quicklime | %wt Finavestan A100B |
|---|---|---|
| Ex. 1.1 | 99.1% | 0.9% |
| Ex. 1.2 | 98.2% | 1.8% |

Their dust areas were measured according to the above described procedure. As references, the dust areas for the quicklime (QL) alone (without the mineral oil) and for a limestone (LS) commonly used in the glass manufacturing were also determined.

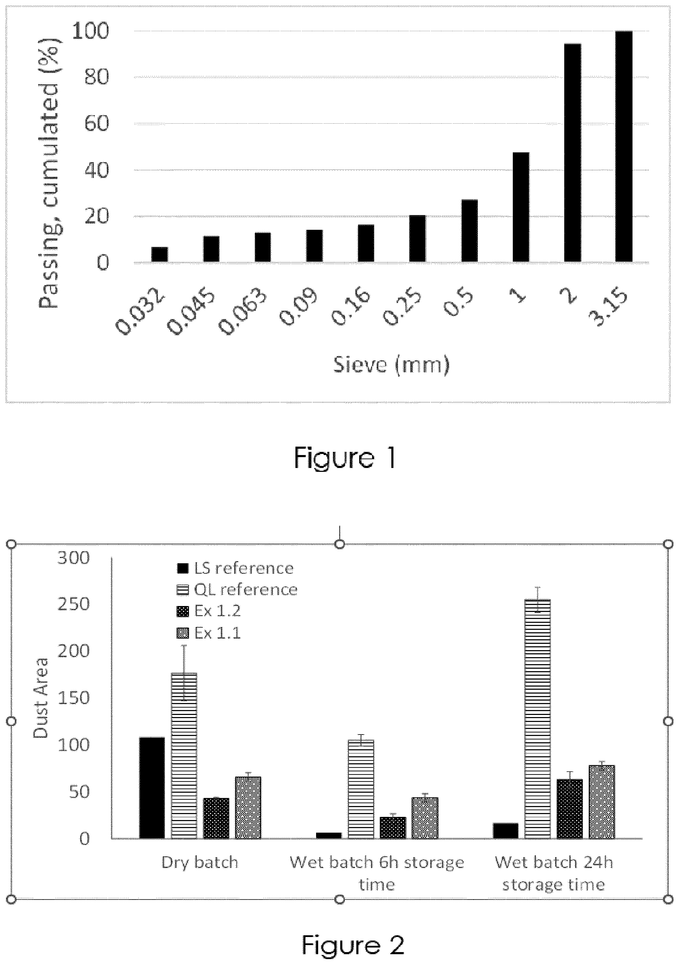

The granulometry of the quicklime used in this example 1 is presented in Figure 1 (granulometry measured by the passing on vibrating screens with different mesh sizes).

The dust area of the raw materials in a dry state is presented in the table below :

| | **Dust area (a.u.)** |
|---|---|
| LS (reference) | 89.3 |
| QL (reference) | 78.7 |
| Ex. 1.2 | 8.7 |
| Ex. 1.1 | 16.3 |

These four raw materials (Exs. 1.1 and 1.2 and the 2 references, QL and LS) were then (after the 24h storage) used as a raw material (i.e. source of Ca) in a glass batch. Each was blended into a planetary mixer (max speed during 5 minutes) with silica sand, soda ash, nepheline syenite and sodium sulphate, as well as dolomite (to bring magnesium to the batch). In total, about 2 kg of glass batch was prepared in each case. The targeted glass batch composition corresponds to a typical container glass composition and is the following : 71.9 % SiO₂, 12.8 % Na₂O, 1.2 % K₂O, 10.7 % CaO, 1.4 % MgO, 1.8 % Al₂O₃, 0.08 % Fe₂O₃ and 0.12 % SO₃.

A sample of each glass batch was taken for dust emission measurements in a dry state. The remaining part was treated with 3 wt% of water (45 g of water for 1.5 kg of batch) into the mixer and agitation was maintained during 5 minutes. The moisturized glass batch ("wet batch") was then recovered and split into 2 samples of about same size and put in separate buckets closed with plastic lids. Those samples were used to measure dust emissions after 6 hours and 24 hours (from water addition).

Results of dust area of the four glass batches in a dry and wet states (6 and 24h) are presented in Figure 2.

As can be seen, the dust areas of the dry glass batches using the raw material of the invention (with mineral oil) are all significantly lower than the limestone reference (LS) and much lower than the quicklime reference (QL). For the glass batches in a wet state, after 6h and 24h of storage, they are all significantly lower than QL reference. However, they are higher than the LS reference because there is a hydration phenomenon over time (increase of dust from 0 to 6h and from 6 to 24h) but this is very reduced compared to the QL reference and is considered as very good for the use in a glass manufacturing process.

### Example 2

Two glass batches were prepared using quicklime as calcium source:
- Example 2.1 : glass batch containing the quicklime reference as in Example 1 (QL); and
- Example 2.2 : glass batch containing a quicklime according to the invention (comprising a mineral oil) and to which waterglass was added as dust suppressor agent and in substitution of water.

For Example 2.2, the quicklime was prepared the same manner and with the same proportions as in Example 1.1.

The two glass batches of this Example 2 were prepared the same manner as in Example 1 and with the same targeted glass batch composition.

A sample of each glass batch was taken for dust emission measurements in a dry state. The remaining part was treated:
- for Example 2.1 : with 3 wt% water; and
- for Example 2.2 : with 0.5 wt% waterglass (10 grams of solution at 44%wt sodium silicate, no additional water added),
into the mixer and agitation was maintained during 5 minutes.

Each resulting glass batch ("wet batch") was then recovered and split into 2 samples of about same size and put in separate buckets closed with plastic lids. Those samples were used to measure dust emissions after 6 hours and 24 hours (from water addition).

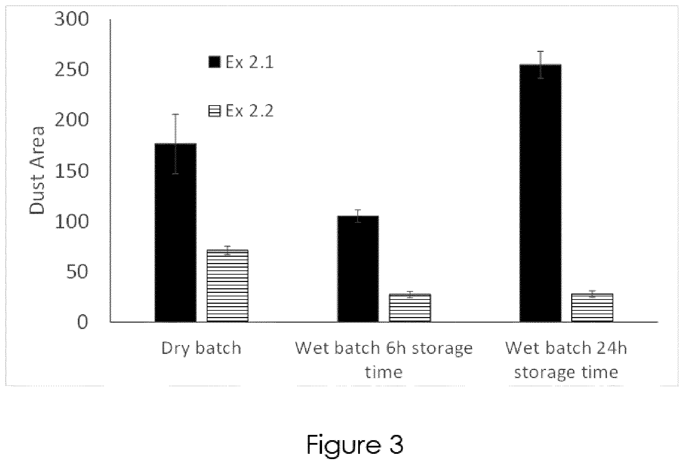

Results of dust area of the two glass batches in a dry and wet states (6 and 24h) are presented in Figure 3.

As can be seen, the embodiment according to the invention where the quicklime comprises a mineral oil and where the glass batch is modified with water glass allows to reach excellent results in terms of dust emissions. One can observed far better results with lower amounts of water (almost ten time lower in weight) than with the use of water at 3 wt% which is a common value for glass batch moisturizing.

## Claims

1. Use of a calcium or calcium-magnesium raw material in a glass batch, for feeding a glass manufacturing process, **characterized in that** said calcium or calcium-magnesium raw material comprises :
- quicklime and/or dolime;
- a non-aqueous organic fluid compound; and
- less than 10 wt% of total carbonate (expressed as CO₂).

2. Use according to the preceding claim, **characterized in that** said calcium or calcium-magnesium raw material comprises less than 5 wt% of bound water expressed as H₂O.

3. Use according to any of the preceding claims, **characterized in that** said non-aqueous organic fluid compound is a mineral oil, a polyolefin, a vegetal oil or a mixture thereof.

4. Use according to the preceding claim, **characterized in that** said non-aqueous organic fluid compound is a mineral oil.

5. Use according to any of the preceding claims, **characterized in that** said non-aqueous organic fluid is essentially free of aromatic fractions and/or polynuclear compounds.

6. Use according to any of the preceding claims, **characterized in that** said non-aqueous organic fluid is in an amount equal or lower than 8 wt%, preferably equal or lower than 4 wt%, more preferably equal or lower than 2 wt% related to the total weight of said calcium or calcium-magnesium raw material.

7. Use according to any of the preceding claims, **characterized in that** said non-aqueous organic fluid is in an amount equal or higher than 0.1 wt%, preferably equal or higher than 0.2 wt%, more preferably equal or higher than 0.3 wt% related to the total weight of said calcium or calcium-magnesium raw material.

8. Use according to any of the preceding claims, **characterized in that** said calcium or calcium-magnesium raw material comprises less than 2000 ppm, preferably less than 1800 ppm and, more preferably, less than 1000 ppm of iron, expressed as Fe₂O₃.

9. Use according to any of the preceding claims, **characterized in that** said glass batch comprises an alkaline silicate, preferably in an amount ranging between 0.1 to 10 wt% related to the total weight of said glass batch.

10. Use according to preceding claim, **characterized in that** said akaline silicate is sodium silicate, in the form of a powder or of an aqueous solution.

11. Use according to any of the preceding claims, **characterized in that** said calcium or calcium-magnesium raw material has a maximum particle size of 10 mm, preferably 8 mm and, more preferably, 5 mm.

12. Use according to any of the preceding claims, **characterized in that** said quicklime and/or dolime has a maximum quantity of fines of 90 wt%, preferably of 80 wt%, or 70 wt% and more preferably 60 wt%.

13. Use according to any of the preceding claims, **characterized in that** said quicklime and/or dolime has a minimum quantity of fines of 10 wt%, preferably of 15 wt% and more preferably, 20 wt%.

14. Use according to any of the preceding claims, **characterized in that** said calcium or calcium-magnesium raw material has a Dust Area (a.u.) below 80, preferably below 50 and, more preferably, below 30, as measured on an amount of 50 grams of said composition in a dry state and with a measurement time of 30 seconds.

15. Process of manufacturing a glass comprising calcium or calcium-magnesium, said process comprising steps of melting a glass batch followed by fining a glass melt in a glass furnace, **characterized in that** the raw material of calcium and/or calcium-magnesium in said glass comprises:
- quicklime and/or dolime,
- a non-aqueous organic fluid compound; and
- less than 10 wt% of total carbonate (expressed as CO₂).

16. Process according to the preceding claim, **characterized in that** said raw material is (i) added in the glass batch or at least of part of the glass batch before it is fed in the glass furnace and/or (ii) directly fed in the glass furnace.

17. Process according to any of claims 15-16, **characterized in that** said non-aqueous organic fluid compound is a mineral oil, a polyolefin, a vegetal oil or a mixture thereof.
